# EUROPÄISCHE PATENTSCHRIFT

(11) **EP 2 752 317 B1**
(45) Veröffentlichungstag und Bekanntmachung des Hinweises auf die Patenterteilung: **14.03.2018**
(21) Anmeldenummer: 13166598.6
(22) Anmeldetag: 06.05.2013
(51) Int. Cl.: B60H 1/28, B60H 1/00

(54) **Kraftfahrzeug mit einem Wasserkasten und einem Klimagerät**
Motor vehicle with a water box and air conditioning system
Véhicule automobile doté d'une boîte d'eau et d'un appareil de climatisation

(43) Veröffentlichungstag der Anmeldung: 09.07.2014
(73) Patentinhaber: WEIDPLAS GmbH, 8700 Küsnacht (CH)
(72) Erfinder: Harke, Stefan, 74889 Sinsheim (DE)
(74) Vertreter: Rutz, Andrea

(56) Entgegenhaltungen:
- DE-A1- 3 330 951
- DE-C1- 3 623 635
- JP-A- H04 135 918

## Beschreibung

Die Erfindung betrifft ein Kraftfahrzeug mit einem Wasserkasten und einem Klimagerät.

Ein Kraftfahrzeug dieser Art ist im Stand der Technik beispielsweise durch die EP 2 052 893 A2 bekannt geworden. Der Wasserkasten dieses Kraftfahrzeugs soll es ermöglichen, dem Klimagerät möglichst trockene und tropfenarme Frischluft zur Verfügung zu stellen. Das Klimagerät besitzt üblicherweise einen Verdampfer und einen Ventilator, der im Betrieb aus dem Wasserkasten Luft ansaugt. Im Klimagerät befindet sich zudem ein Luftfilter. Übliche Wasserkästen können jedoch nicht vermeiden, dass Wassertropfen in das Klimagerät gelangen. Diese Tropfen können sich im Luftfilter absetzen und zu einem unerwünschten Pilzbefall führen. Der Wasserkasten gemäss EP 2 052 893 A2 hat zudem die Funktion, Schwallwasser, wie beispielsweise über die Frontscheibe sowie die Motorhaube des Kraftfahrzeuges abströmendes Regenwasser oder Wasser eine Kraftfahrzeugwaschanlage, abzuleiten. Hierzu weist der Wasserkasten in der Bodenwandung eine Auslassöffnung auf.

Eine in der EP 2 052 893 A2 offenbarte Ausführungsform weist eine Tropfenabscheidevorrichtung auf. Diese ist als Leitwand ausgebildet, welche in den Innenraum des Wasserkastens ragt und die von der angesaugten Luft umströmt wird.

Eine weitere Ausführungsform in der EP 2 052 893 A2 weist eine Luftklappe auf, welche geöffnet werden kann, um einen Unterdruck im Innenraum des Wasserkastens zu vermindern. Nachteilig bei dieser Ausführungsform ist, dass die über die Luftklappe in den Innenraum des Wasserkastens gelangende Luft sich mit über die Einlassöffnung in den Innenraum einströmendem Schwallwasser, wie beispielsweise über die Frontscheibe sowie über die Motorhaube des Kraftfahrzeuges abströmendes Regenwasser oder Wasser einer Kraftfahrzeugwaschanlage, vermischen kann. Das in der Luft enthaltene Wasser muss unter hohem Energieaufwand wieder aus der Luft abgeschieden werden. Zudem kann die über die Luftklappe in den Innenraum des Wasserkastens gelangende Luft Feuchtigkeit von im Innenraum des Wasserkastens angeordneten Schwallwasser, insbesondere auf der horizontalen Bodenwandung oder in der Auslassöffnung angeordneten Schwallwasser, aufnehmen.

Durch die DE 10 2004 051 198 B3 ist eine Frischluftzuführvorrichtung bekannt geworden, die einen Wasserkasten mit einer Tropfenabscheidekammer aufweist. In dieser Tropfenabscheidekammer soll die Abscheidung von Wassertropfen aus der Luftströmung an einer Wand durch Impulserhaltung des Tropfens und einer Umlenkung der Luftströmung sowie durch Gravitation erreicht werden. Eine solche Tropfenabscheidekammer ist vergleichsweise aufwendig und erfordert zusätzlichen Raum, welcher insbesondere in einem Motorraum nicht ohne weiteres zur Verfügung steht. Die Umlenkung von Luft benötigt zudem zusätzliche Energie, welche durch das Klimagerät bzw. den Ventilator aufgebracht werden muss. Vor allem bei Elektrofahrzeugen und Hybridfahrzeugen ist die Energiebilanz jedoch wesentlich. Um möglichst trockene und tropfenarme Frischluft dem Klimagerät zur Verfügung zu stellen, weisen die bekannten Wasserkästen jeweils ein vergleichsweise grosses Innenvolumen auf.

US 2,235,642 offenbart ein Kraftfahrzeug mit einem im Motorraum angeordneten Leitungselement, welches mit einer Frischlufteinlassöffnung in der Motorhaube verbunden ist. Das Leitungselement ist wiederum über eine Öffnung mit einer Wärmeaustauscheinheit verbunden, welche mit dem Fahrgastraum verbunden ist. Diese Anordnung ermöglicht, dass über die Frischlufteinlassöffnung in das Leitungselement einströmende Frischluft in den Fahrgastraum gelangen kann. An einer unteren Kante des Leitungselementes ist eine Mulde angeordnet, um Wasser aus dem Leitungselement abzulassen. Oberhalb der Mulde ist im Leitungselement ein Prallblech angeordnet, welches verhindert, dass Dreck oder Regenwasser über die Öffnung das Leitungselement verlassen kann. Zudem weist das Leitungselement oberhalb der Mulde eine weitere Öffnung auf, über welche Luft aus dem Fahrgastraum in das Leitungselement einströmen kann. Nachteilig bei der beschriebenen Anordnung ist, dass die über die weitere Öffnung aus dem Fahrgastraum in das Leitungselement einströmende Luft sich mit über die Frischlufteinlassöffnung in das Leitungselement eintretendem Schwallwasser, wie beispielsweise über die Frontscheibe sowie über die Motorhaube des Kraftfahrzeuges abströmendem Regenwasser oder Wasser einer Kraftfahrzeugwaschanlage, vermischen und so wiederum Wasser, insbesondere tropfenförmiges Wasser, aufnehmen kann. Falls wasserarme Luft im Fahrgastraum gewünscht wird, muss das in der Luft enthaltene Wasser unter hohem Energieaufwand wieder aus der Luft abgeschieden werden.

DE 10 2009 048 068 A1 offenbart eine erste Ausführungsform einer Ansaugeinheit für eine Klimaanlage, welche für die Zufuhr von Frischluft zur Klimaanlage vorgesehen ist. Die Ansaugeinheit umfasst einen Luftströmungskanal, der eine Ansaugöffnung für Frischluft aufweist. Der Luftströmungskanal weist eine Wasserabscheidungskammer auf, in der aus der einströmenden Frischluft Wassertropfen ausfallen. An der tiefsten Stelle des Luftströmungskanals ist ein Drainageauslass für Wasser angeordnet. Über der Wasserabscheidungskammer ist ein Luftfilter angeordnet, unter welchem eine Ansaugöffnung angeordnet ist, die wahlweise durch eine Klappe geöffnet und geschlossen werden kann, um der Wasserabscheidungskammer Innenraumluft zuzuführen oder nicht. Um die Abscheidung von Wassertropfen zu erleichtern, kann ein Kanalwandabschnitt der Wasserabscheidungskammer eine rauere Oberfläche oder rippenartige Vorsprünge besitzen. Nachteilig bei dieser ersten Ausführungsform ist, dass die Innenraumluft im Wasserabscheidungsraum angeordnetes Schwallwasser überströmt und so Wasser aufnimmt. Somit strömt mit Wasser, insbesondere tropfenförmigem Wasser, beladene Innenraumluft wieder in die Klimaanlage. Dies führt, wie schon dargelegt, beispielsweise zur Verpilzung von in der Klimaanlage angeordneten Filtern. Das in der Luft enthaltene Wasser muss zudem von der Klimaanlage unter hohem Energieaufwand wieder aus der Luft abgeschieden werden.

Eine zweite Ausführungsform der in der DE 10 2009 048 068 A1 offenbarten Ansaugeinheit umfasst einen Luftströmungskanal mit einer Ansaugeinheit, welche am höchsten Punkt der Ansaugeinheit angeordnet ist. In einem im Wesentlichen horizontalen Abschnitt des Luftströmungskanales ist eine Klappe angeordnet zum Zuführen von Innenraumluft in den Luftströmungskanal. Ein vertikal nach unten abfallender Abschnitt des Luftströmungskanales bildet eine Wasserabscheidekammer, wobei über einen Drainageabfluss Wasser aus der Wasserabscheidungskammer abfliessen kann. Nachteilig bei dieser zweiten Ausführungsform ist, dass die Innenraumluft im Wasserabscheidungsraum angeordnetes Schwallwasser überströmt, so dass die Innenraumluft Wasser aufnimmt. Somit strömt mit Wasser, insbesondere tropfenförmigem Wasser, beladene Innenraumluft, in die Klimaanlage. Dies führt, wie schon dargelegt, beispielsweise zur Verpilzung von in der Klimaanlage angeordneten Filtern. Das in der Luft enthaltene Wasser muss wiederum von der Klimaanlage unter hohem Energieaufwand wieder aus der Luft abgeschieden werden.

DE 196 51 669 C1 offenbart eine in einem Kraftfahrzeug angeordnete Luftansaugvorrichtung umfassend ein Aussengehäuse mit einem Frischlufteinlass sowie einem Wasserablaufstutzen sowie einem im Aussengehäuse eingesetztes Innengehäuse. In der Stirnwand ist eine Umluftöffnung zum Ansaugen von Umluft aus dem Innenraum des Kraftfahrzeuges angeordnet. Ein Verdampfer der Klimaanlage des Kraftfahrzeuges ist im Innengehäuse aufgenommen. Im Verdampfer sich bildendes Kondenswasser kann über den Wasserablaufstutzen abfliessen. Nachteilig bei dieser Luftansaugvorrichtung ist, dass die in die Luftansaugvorrichtung einströmende Umluft oberhalb des Wasserablaufstutzens und / oder im Wasserablaufstutzen angeordnetes Schwallwasser überströmt und so Wasser aufnimmt. Somit strömt mit Wasser, insbesondere tropfenförmigem Wasser, beladene Umluft, in den Verdampfer, der unter hohem Energieaufwand das Wasser wieder aus der Luft abscheiden muss.

Eine weitere Frischluftzuführeinrichtung mit einer Wasserabscheidevorrichtung gemäß Oberbegriff des Anspruchs 1 ist in der DE 33 30 951 A1 offenbart.
Es ist also die Aufgabe der vorliegenden Erfindung, ein Kraftfahrzeug zu schaffen, das die genannten Nachteile vermeidet. Beim erfindungsgemässen Kraftfahrzeug soll somit die Frischluftzufuhr zum Fahrgastraum so möglich sein, dass diese einerseits energieärmer erfolgen kann und andererseits im Klimagerät weniger Feuchtigkeit abgesetzt wird.
Zur Lösung dieser Aufgabe wird ein Kraftfahrzeug vorgeschlagen, wie es in Anspruch 1 angegeben ist. Vorteilhafte Ausgestaltungen der Erfindung sind in den abhängigen Ansprüchen angegeben.

Orts- und Richtungsangaben wie oben, unten, vertikal, horizontal, nach oben, nach unten, luftstromabwärts, luftstromaufwärts etc. betreffen im Folgenden jeweils den Wasserkasten, welcher auf bestimmungsgemässe Weise im Kraftfahrzeug eingebaut ist. Die Lufteinlassöffnung und vorteilhaft auch die Luftauslassöffnung sind dann üblicherweise oberhalb der Wasserablassöfnung angeordnet.

Die vorliegende Erfindung stellt ein Kraftfahrzeug zur Verfügung, aufweisend
einen Fahrgastraum, einen Wasserkasten und ein Klimagerät, das mit dem Wasserkasten verbunden ist, welcher einen Innenraum umfassend einen Wasserabscheideraum, wenigstens eine Lufteinlassöffnung, wenigstens eine Luftauslassöffnung sowie wenigstens eine Wasserablassöffnung zum Ausscheiden von Wasser aus dem Wasserabscheideraum aufweist, wobei
die wenigstens eine Lufteinlassöffnung, die wenigstens eine Luftauslassöffnung sowie die wenigstens eine Wasserablassöffnung über den Innenraum miteinander verbunden sind, wobei
an der wenigstens einen Lufteinlassöffnung mittels des Klimagerätes Frischluft ansaugbar ist, die durch den mit der wenigstens einen Lufteinlassöffnung sowie mit der wenigstens einen Luftauslassöffnung verbundenen und von einer Bodenwandung, einer Seitenwandung sowie einer Deckenwandung des Wasserkastens begrenzten Wasserabscheideraum sowie über die wenigstens eine Luftauslassöffnung zum Klimagerät und von diesem in den Fahrgastraum strömt,
wobei der Innenraum mit dem Fahrgastraum verbunden ist, so dass bei Betrieb des Klimagerätes Luft aus dem Fahrgastraum und gleichzeitig Frischluft dem Innenraum zuführbar ist, und wobei
in der Bodenwandung die wenigstens eine Wasserablassöffnung zum Ausscheiden von Wasser aus dem Wasserabscheideraum angeordnet ist, dadurch gekennzeichnet, dass der Innenraum aus einem luftstromabwärts von der Wasserablassöffnung gelegenen Teilbereich sowie einem luftstromaufwärts von der Wasserablassöffnung gelegenen Teilbereich besteht, wobei der luftstromabwärts von der Wasserablassöffnung gelegene Teilbereich unmittelbar mit dem Fahrgastraum verbunden ist.

Das erfindungsgemässe Kraftfahrzeug weist somit einen Fahrgastraum, einen Wasserkasten und ein Klimagerät auf, wobei das Klimagerät mit dem Wasserkasten verbunden ist. Der Wasserkasten umfasst einen Innenraum, wobei der Innenraum einen Wasserabscheideraum aufweist. Der Wasserkasten umfasst zudem eine Bodenwandung, eine Seitenwandung sowie eine Deckenwandung, welche gemeinsam den Wasserabscheideraum begrenzen. Zusätzlich zum Innenraum umfasst der Wasserkasten wenigstens eine Lufteinlassöffnung, wenigstens eine Luftauslassöffnung sowie wenigstens eine Wasserablassöffnung. Die Wasserablassöffnung ist geeignet Wasser aus dem Wasserabscheideraum auszuscheiden. Die wenigstens eine Lufteinlassöffnung, die wenigstens eine Luftauslassöffnung sowie die wenigstens eine Wasserablassöffnung sind über den Innenraum miteinander verbunden. An der wenigstens einen Lufteinlassöffnung ist mittels des Klimagerätes Frischluft ansaugbar, die durch den mit der wenigstens einen Lufteinlassöffnung sowie mit der wenigstens einen Luftauslassöffnung verbundenen Wasserabscheideraum sowie über die wenigstens eine Luftauslassöffnung zum Klimagerät und von diesem in den Fahrgastraum strömen kann. Der Innenraum ist mit dem Fahrgastraum verbunden, so dass bei Betrieb des Klimagerätes Luft aus dem Fahrgastraum und gleichzeitig Frischluft dem Innenraum zuführbar ist. In der Bodenwandung ist die wenigstens eine Wasserablassöffnung angeordnet, welche geeignet ist, Wasser aus dem Wasserabscheideraum abzuscheiden. Zudem besteht der Innenraum aus einem luftstromabwärts von der Wasserablassöffnung gelegenen Teilbereich sowie einem luftstromaufwärts von der Wasserablassöffnung gelegenen Teilbereich, wobei der luftstromabwärts von der Wasserablassöffnung gelegene Teilbereich unmittelbar mit dem Fahrgastraum verbunden ist. Das Merkmal, dass der luftstromabwärts von der Wasserablassöffnung gelegene Teilbereich unmittelbar mit dem Fahrgastraum verbunden ist, bedeutet, dass die Luft aus dem Fahrgastraum direkt in den luftstromabwärts von der Wasserablassöffnung gelegenen Teilbereich einströmt. Diese unmittelbare Verbindung bietet den Vorteil, dass die Wahrscheinlichkeit reduziert ist, dass die aus dem Fahrgastraum dem luftstromabwärts von der Wasserablassöffnung gelegenen Teilbereich zuzuführende Luft Wasser aufnehmen kann.

Beim Betrieb des Klimagerätes besteht somit ein Luftzyklus zwischen dem Fahrgastraum, dem Wasserkasten und dem Klimagerät. Der Erfindung liegt die Erkenntnis zugrunde, dass die Luft im Fahrgastraum vergleichsweise zur Frischluft trockener ist, d.h. weniger Wasserdampf aufweist als auch tropfenärmer ist und insbesondere im Wesentlichen keine Tropfen aufweist. Dies wird insbesondere dadurch erreicht, dass der Verdampfer die Frischluft durch Kühlung trocknet und Topfen aus der Frischluft abscheidet. Diese Luft ist im Wesentlichen tropfenfrei und in der Regel wesentlich trockner als die Frischluft, die an der Lufteinlassöffnung des Wasserkastens angesaugt wird. Dies insbesondere dann, wenn die Aussenluft bei regnerischem Wetter vergleichsweise feucht ist, d.h. einen hohen Wasserdampfgehalt aufweist und zudem tropfenreich ist. Der Fahrgastraum des erfindungsgemässen Kraftfahrzeuges ist unmittelbar mit einem luftstromabwärts von der Wasserablassöffnung gelegenen Teilbereich des Innenraumes verbunden. Der luftstromabwärts von der Wasserablassöffnung gelegene Teilbereich des Innenraumes ist derjenige Teilbereich des Innenraumes, in welchen die an der Wasserablassöffnung vorbeigeströmte Frischluft, wie beispielsweise durch Überhinwegströmung der Wasserablassöffnung, eintritt. Die aus dem Fahrgastraum direkt in den luftstromabwärts von der Wasserablassöffnung gelegenen Teilbereich einströmende Luft vermischt sich im luftstromabwärts von der Wasserablassöffnung gelegenen Teilbereich mit der angesaugten Frischluft und löst in der Frischluft noch vorhandene Tropfen wenigstens teilweise, bevorzugt weitgehend, auf. Da die Umluft, beziehungsweise die Luft aus dem Fahrgastraum, in den luftstromabwärts von der Wasserablassöffnung gelegenen Teilbereich des Innenraumes eintritt, ist die Wahrscheinlichkeit, dass diese Luft Wasser aus dem durch die Lufteinlassöffnung in den Innenraum gelangenden Schwallwasser aufnehmen kann, reduziert, da über die Lufteinlassöffnung in den Wasserabscheideraum eintretendes Schwallwasser zuerst in den im Wasserabscheideraum angeordneten Raumabschnitt des luftstromaufwärts von der Wasserablassöffnung gelegenen Teilbereich gelangt und über die Wasserablassöffnung den Wasserkasten wieder verlässt, so dass die Wahrscheinlichkeit reduziert ist, dass das Schwallwasser beim erfindungsgemässen Kraftfahrzeug in den luftstromabwärts von der Wasserablassöffnung gelegenen Teilbereich gelangen kann und somit in Kontakt mit der aus dem Fahrgastraum in den luftstromabwärts gelegenen Teilbereich einströmenden Luft kommen kann. Daher kann die Umluft, beziehungsweise die aus dem Fahrgastraum stammende Luft, die in der Frischluft vorhandenen Tropfen besser auflösen. Somit weist die dem Klimagerät zugeführte Frischluft weniger Tropfen auf. Das Klimagerät muss daher weniger Tropfen abscheiden, beziehungsweise der Verdampfer muss weniger arbeiten, und somit ist Energieverbrauch reduziert. Vorteilhaft ist, dass die in den Wasserkasten einströmende Luft aus dem Fahrgastraum den Strömungswiderstand nicht erhöht. Der Strömungswiderstand des Wasserkastens und damit der Energieverbrauch des Klimagerätes kann dadurch gering gehalten werden. Wesentlich ist zudem, dass ein solcher Wasserkasten aufgrund des kleineren Strömungswiderstandes entsprechend weniger Geräusche erzeugt. Es hat sich auch gezeigt, dass, durch die aus dem Fahrgastraum in den Wasserkasten einströmende Luft, in den Wasserkasten eingedrungener Schnee aufgelöst und insbesondere sublimiert werden kann. Dies ermöglicht die Verwendung eines Schneegitters mit weiteren Maschen oder sogar die Vermeidung eines Schneegitters, wodurch die Herstellungskosten vermindert werden können. Die Auflösung der Tropfen bewirkt zudem eine Kühlung der angesaugten Frischluft. Somit findet eine Vorkühlung der Frischluft statt, bevor diese in die Klimaanlage eintritt, und somit muss der Verdampfer weniger arbeiten. Aufgrund der Vermischung der aus dem Fahrgastraum in den Wasserkasten einströmenden Luft mit der angesaugten Frischluft bewirkten Auflösung der Tropfen kann beim erfindungsgemässen Kraftfahrzeug im Innenraum des Wasserkastens eine vergleichsweise einfache Tropfenabscheidevorrichtung vorgesehen sein. Aufgrund des Einbaus einer einfacheren Tropfenabscheidevorrichtung kann das Volumen des Innenraums des Wasserkastens und somit die Aussendimensionen des Wasserkastens reduziert werden. Zudem sinkt der Luftwiderstand im Innenraum des Wasserkastens. Aufgrund des geringeren Luftwiderstandes muss der Ventilator weniger arbeiten, so dass der Energieverbrauch sinkt. Ein Wasserkasten mit einer einfacheren Tropfenabscheidevorrichtung kann kostengünstiger hergestellt werden.

Nach einer Weiterbildung der Erfindung ist der im Wasserabscheideraum angeordnete Raumabschnitt des luftstromabwärts von der Wasserablassöffnung gelegenen Teilbereichs unmittelbar mit dem Fahrgastraum verbunden. Diese Weiterbildung der Erfindung bietet den Vorteil, dass im Wasserabscheideraum angeordneten Raumabschnitt des luftstromabwärts von der Wasserablassöffnung gelegenen Teilbereichs die Umluft, beziehungsweise die aus dem Fahrgastraum in den Wasserkasten einströmende Luft, mit der Frischluft vermischt wird. Diese vermischte Luft muss in der Regel eine vergleichsweise längere Wegstrecke zum Klimagerät zurücklegen als beispielsweise bei einer Anordnung, bei welcher der Fahrgastraum mit einem Raumbereich des luftstromabwärts von der Wasserablassöffnung gelegenen Teilbereichs, welcher ausserhalb des Wasserabscheideraumes, angeordnet ist, verbunden ist. Aufgrund der längeren Wegstrecke steht ein längerer Zeitraum zur Verfügung für die Auflösung von in der Frischluft vorhandenen Tropfen, und somit ist eine bessere Auflösung von in der Frischluft vorhandenen Tropfen möglich.

Nach einer Weiterbildung der Erfindung ist in der Bodenwandung und / oder in der Seitenwandung und / oder in der Deckenwandung, bevorzugt in der Seitenwandung und / oder in der Deckenwandung, wenigstens eine Lufteintrittsöffnung und / oder wenigstens eine Luftaustrittsöffnung angeordnet, wobei der Wasserabscheideraum über die wenigstens eine Lufteintrittsöffnung mit der wenigstens einen Lufteinlassöffnung des Wasserkastens verbunden ist und wobei der Wasserabscheideraum über die wenigstens eine Luftaustrittsöffnung mit der wenigstens einen Luftauslassöffnung des Wasserkastens verbunden ist. Bevorzugt sind die wenigstens eine Lufteintrittsöffnung sowie die wenigstens eine Luftaustrittsöffnung oberhalb der wenigstens einen Wasserablassöffnung angeordnet. Bevorzugt sind die Lufteintrittsöffnung sowie die Luftaustrittsöffnung einander gegenüberliegend angeordnet. Bevorzugt sind die Lufteintrittsöffnung sowie die Luftaustrittsöffnung in der Seitenwandung angeordnet. Die wenigstens eine Lufteinlassöffnung und die wenigstens eine Luftauslassöffnung sind beispielsweise im Wesentlichen auf gleicher Höhe oder höhenversetzt zueinander angeordnet. Bevorzugt ist die wenigstens eine Luftaustrittsöffnung über wenigstens einen ersten Kanal mit der wenigstens einen Luftauslassöffnung verbunden. Bevorzugt ist der luftstromabwärts von der Wasserablassöffnung gelegene Teilbereich unmittelbar mit dem Fahrgastraum verbunden, so dass bei Betrieb des Klimagerätes Luft aus dem Fahrgastraum und gleichzeitig Frischluft dem wenigstens einen ersten Kanal zuführbar ist. Bevorzugt ist die wenigstens eine Lufteintrittsöffnung über wenigstens einen zweiten Kanal mit der wenigstens einen Lufteinlassöffnung verbunden, wobei der zweite Kanal bevorzugt wenigstens einen Wasservorabscheideablauf für Schwallwasser aufweist. Das Vorsehen eines Wasservorabscheideablaufs reduziert die Wahrscheinlichkeit, dass Schwallwasser in den luftstromabwärts von der Wasserablassöffnung gelegenen Teilbereich gelangen und von der Umluft, beziehungsweise von der aus dem Fahrgastraum in den luftstromabwärts von der Wasserablassöffnung gelegenen Teilbereich gelangenden Luft, aufgenommen werden kann.

Nach einer Weiterbildung der Erfindung ist in der Bodenwandung und / oder in der Seitenwandung und / oder in der Deckenwandung, bevorzugt in der Seitenwandung und / oder in der Deckenwandung wenigstens eine Lufteintrittsöffnung und / oder wenigstens eine Luftaustrittsöffnung angeordnet, wobei die wenigstens eine Lufteintrittsöffnung die wenigstens eine Lufteinlassöffnung des Wasserkastens bildet und / oder die wenigstens eine Luftaustrittsöffnung die wenigstens eine Luftauslassöffnung des Wasserkastens bildet.

Das Kraftfahrzeug weist erfindungsgemäß wenigstens einen Luftkanal auf, über welchen der luftstromabwärts von der Wasserablassöffnung gelegene Teilbereich unmittelbar mit dem Fahrgastraum verbunden ist. Bevorzugt weist der Luftkanal ein Ventil auf, das beim Ansaugen von Luft aus dem Fahrgastraum geöffnet ist. Das Ventil kann beispielsweise eine schwenkbare Klappe aufweisen. Bevorzugt ist das Ventil gesteuert. Zur Steuerung kann beispielsweise ein Sensor, beispielsweise ein Feuchtigkeitssensor, vorgesehen sein, der beispielsweise im Klimagerät angeordnet ist. Die Zufuhr von Luft aus dem Fahrgastraum kann dadurch optimiert werden. Bevorzugt weist der Luftkanal wenigstens ein Luftfördermittel auf zur Steuerung der Zuführung der Luftmenge vom Fahrgastraum in den Wasserkasten. Das Luftfördermittel ist beispielsweise ein Gebläse oder ein Ventilator. Der Luftkanal weist erfindungsgemäß wenigstens einen Abschnitt auf, welcher wenigstens eine Luftausgangsöffnung umfasst, wobei der wenigstens eine Abschnitt in den Innenraum, bevorzugt in den Wasserabscheideraum, ragt sowie die wenigstens eine erste Tropfenabscheidevorrichtung bildet, wobei die wenigstens eine Luftausgangsöffnung im luftstromaufwärts von der Wasserablassöffnung gelegenen Teilbereich angeordnet ist. Diese Ausführungsform der Erfindung ermöglicht die Ausbildung eines kompakten, wenig Bauraum im Kraftfahrzeug beanspruchenden Wasserkastens. Die erste Tropfenabscheidevorrichtung hat einerseits die Funktion, Luft aus dem Fahrgastraum in den luftstromabwärts von der Wasserablassöffnung gelegenen Teilbereich zu transportieren, welche in der Frischluft vorhandene Wassertropfen auflösen kann, und andererseits die weitere Funktion, aus der durch den Innenraum des Wasserkastens hindurchströmenden Luft Wassertropfen abzuscheiden, indem die hindurchströmende Luft die erste Tropfenabscheidevorrichtung umströmt. Bevorzugt ist der Abschnitt wenigstens teilweise im luftstromaufwärts von der Wasserablassöffnung gelegenen Teilbereich, bevorzugter im Wesentlichen im luftstromaufwärts von der Wasserablassöffnung gelegenen Teilbereich, angeordnet. Durch die Anordnung des Abschnittes wenigstens teilweise im luftstromaufwärts von der Wasserablassöffnung gelegenen Teilbereich kann Feuchtigkeit, insbesondere in der Form von Wassertropfen, aus der Frischluft vorabgeschieden werden, bevor die Frischluft mit der Umluft, beziehungsweise der aus dem Fahrgastraum in den Wasserkasten einströmenden Luft, in Kontakt kommen kann. Somit muss die Umluft weniger Tropfen auflösen, beziehungsweise kann die in der Frischluft vorhandenen Tropfen besser auflösen. Bei der Anordnung des Abschnittes im Wesentlichen im luftstromaufwärts von der Wasserablassöffnung gelegenen Teilbereich zeigen sich die genannten Vorteile noch mehr. Bevorzugt ist die Luftausgangsöffnung luftstromabwärts ausgerichtet. Diese bevorzugte Ausrichtung der Luftausgangsöffnung erlaubt eine verbesserte Vermischung der Umluft, beziehungsweise der aus dem Fahrgastraum stammenden Luft, mit der durch den Innenraum des Wasserkastens hindurchströmenden Frischluft.

Nach einer Weiterbildung der Erfindung grenzen der luftstromabwärts von der Wasserablassöffnung gelegene Teilbereich sowie der luftstromaufwärts von der Wasserablassöffnung gelegene Teilbereich an einer Ebene aneinander, welche in einem Winkel von im Wesentlichen 90°, insbesondere in einem Winkel von 90°, zu einer im Wesentlichen horizontal sich erstreckenden Fläche der Wasserablassöffnung, insbesondere zu einer horizontal sich erstreckenden Fläche der Wasserablassöffnung, steht, wobei die Ebene sich von der der Luftauslassöffnung nächstliegenden Kante der Wasserablassöffnung zur Deckenwandung erstreckt, insbesondere wobei die Ebene sich von der der Luftaustrittsöffnung des Wasserabscheideraumes nächstliegenden Kante der Wasserablassöffnung zur Deckenwandung erstreckt. Diese Weiterbildung der Erfindung reduziert die Wahrscheinlichkeit, dass die Umluft, beziehungsweise die aus dem Fahrgastraum in den luftstromabwärts von der Wasserablassöffnung gelegenen Teilbereich eintretende Luft, Feuchtigkeit aus dem durch die Lufteinlassöffnung in den Innenraum gelangenden Schwallwasser aufnehmen kann.

Nach einer Weiterbildung der Erfindung ist im luftstromabwärts von der Wasserablassöffnung gelegenen Teilbereich und / oder im luftstromaufwärts von der Wasserablassöffnung gelegenen Teilbereich, bevorzugt im luftstromaufwärts von der Wasserablassöffnung gelegenen Teilbereich, bevorzugter im Wasserabscheideraum angeordneten Raumabschnitt des luftstromaufwärts von der Wasserablassöffnung gelegenen Teilbereichs, wenigstens eine zweite Tropfenabscheidevorrichtung angeordnet, die von der angesaugten Frischluft umströmt wird. Die zweite Tropfenabscheidevorrichtung hat, im Vergleich zur ersten Tropfenabscheidevorrichtung, ausschliesslich die Funktion, aus der durch den Innenraum des Wasserkastens hindurchströmenden Luft Wassertropfen abzuscheiden, indem die hindurchströmende Luft die zweite Tropfenabscheidevorrichtung umströmt. Durch den Umströmvorgang werden Tropfen aus der umströmenden Frischluft abgeschieden. Aufgrund der zweiten Tropfenabscheidevorrichtung ist eine weitere Reduktion der in der Frischluft enthaltenen Feuchtigkeit, wie beispielsweise in der Form von Wassertropfen, möglich. Bevorzugt ist die zweite Tropfenabscheidevorrichtung im luftstromaufwärts von der Wasserablassöffnung gelegenen Teilbereich angeordnet. Bei dieser bevorzugten Ausführungsform kann Feuchtigkeit, insbesondere in der Form von Wassertropfen, aus der Frischluft vorabgeschieden werden, bevor die Frischluft mit der Umluft, beziehungsweise der aus dem Fahrgastraum in den Wasserkasten einströmenden Luft, in Kontakt kommen kann. Somit muss die Umluft weniger Tropfen auflösen, beziehungsweise die Umluft kann die noch in der Frischluft vorhandenen Wassertropfen besser auflösen. Bevorzugt ist die zweite Tropfenabscheidevorrichtung an der Deckenwandung angeordnet, insbesondere an der Deckenwandung befestigt, und ragt nach unten in den Wasserabscheideraum und / oder die zweite Tropfenabscheidevorrichtung ist an der Seitenwandung angeordnet, insbesondere an der Seitenwandung befestigt, und ragt in den Wasserabscheideraum hinein. Diese Anordnung der zweiten Tropfenabscheidevorrichtung erlaubt eine effiziente Abscheidung von Wasser, insbesondere tropfenförmigem Wasser, aus der durch den Wasserabscheideraum hindurchströmenden Frischluft. Falls die zweite Tropfenabscheidevorrichtung im luftstromabwärts von der Wasserablassöffnung gelegenen Teilbereich angeordnet ist, ist bevorzugt luftstromabwärts von der zweiten Tropfenabscheidevorrichtung, beziehungsweise nach der zweiten Tropfenabscheidevorrichtung, der Fahrgastraum mit dem luftstromabwärts von der Wasserablassöffnung gelegenen Teilbereich unmittelbar verbunden. Diese Anordnung bietet den Vorteil, dass Feuchtigkeit, insbesondere in der Form von Wassertropfen, aus der Frischluft vorabgeschieden werden kann, bevor die Frischluft mit der Umluft, beziehungsweise der aus dem Fahrgastraum in den Wasserkasten strömenden Luft, in Kontakt kommen kann. Somit muss die Umluft weniger Tropfen auflösen, beziehungsweise kann die in der Frischluft vorhandenen Tropfen besser auflösen.

Selbstverständlich kann der Fahrgastraum auch luftstromaufwärts von der zweiten Tropfenabscheidevorrichtung, beziehungsweise vor der zweiten Tropfenabscheidevorrichtung, unmittelbar mit dem luftstromabwärts von der Wasserablassöffnung gelegenen Teilbereich verbunden sein. Diese Anordnung hat den Vorteil, dass beim Umströmen der zweiten Tropfenabscheidevorrichtung sich die vom Fahrgastraum angesaugte Luft, beziehungsweise sich die aus dem Fahrgastraum in den Wasserkasten stömende Luft, besonders gründlich mit der Frischluft vermengen und dadurch Wassertropfen auflösen kann.

Nach einer Weiterbildung der Erfindung ist die wenigstens eine erste Tropfenabscheidevorrichtung und / oder die wenigstens eine zweite Tropfenabscheidevorrichtung vor und / oder nach dem Wasserabscheideraum im Innenraum des Wasserkasten angeordnet. Dies verbessert die Wasserabscheidung aus der durch den Wasserkasten hindurchströmenden Luft.

Nach einer Weiterbildung der Erfindung ist im Innenraum des Wasserkastens, insbesondere im Wasserabscheideraum des Wasserkastens, keine Tropfenabscheidevorrichtung angeordnet. Aufgrund der Vermischung der aus dem Fahrgastraum in den luftstromabwärts von der Wasserablassöffnung gelegenen Teilbereich des Wasserkastens einströmenden Luft mit der angesaugten Frischluft bewirkten Auflösung der Tropfen kann beim erfindungsgemässen Kraftfahrzeug auf die Anordnung einer Tropfenabscheidevorrichtung im Innenraum des Wasserkastens verzichtet werden. Aufgrund des Verzichtes einer Tropfenabscheidevorrichtung können das Volumen des Innenraums des Wasserkastens und somit die Aussendimensionen des Wasserkasten reduziert werden. Zudem sinkt der Luftwiderstand im Innenraum des Wasserkastens. Aufgrund des geringeren Luftwiderstandes muss der Ventilator weniger arbeiten, so dass der Energieverbrauch sinkt. Ein Wasserkasten ohne Tropfenabscheidevorrichtung kann kostengünstiger hergestellt werden.

Nach einer Weiterbildung der Erfindung ist vorgesehen, dass das Klimagerät im Fahrgastraum angeordnet ist. Der Wasserkasten ist hierbei vorzugsweise im Motorraum, beispielsweise unterhalb der Motorhaube angeordnet. Bevorzugt ist das Klimagerät im Fahrgastraum angeordnet und der Wasserkasten im Motorraum angeordnet. Diese bevorzugte Anordnung bietet den Vorteil, dass die im luftstromabärts von der Wasserablassöffnung gelegenen Teilbereich mit der Umluft vermischte Frischluft, insbesondere die im Wasserabscheideraum angeordneten Raumabschnitt des luftstromabwärts von der Wasserablassöffnung gelegenen Teilbereichs mit der Umluft vermischte Frischluft, eine in der Regel vergleichsweise längere Wegstrecke zum Klimagerät zurücklegen muss als beispielsweise die vermischte Frischluft bei einer Anordnung, bei welcher der Wasserkasten als auch das Klimagerät im Motorraum angeordnet sind. Aufgrund der längeren Wegstrecke steht ein längerer Zeitraum zur Verfügung für die Auflösung von in der Frischluft vorhandenen Tropfen. Somit ist eine bessere Auflösung von in der Frischluft vorhandenen Tropfen möglich. Das Klimagerät weist vorzugsweise in an sich bekannter Weise zum Kühlen einen Verdampfer, eine Heizung, einen Ventilator sowie einen Luftfilter auf. Das erfindungsgemässe Kraftfahrzeug kann somit ein an sich bekanntes Klimagerät bzw. ein Klimamodul aufweisen. Ein Klimamodul ist ein Klimagerät bei dem die vorhandenen Elemente in einem Gehäuse angeordnet sind. Grundsätzlich könnte das Klimagerät auch im Motorraum angeordnet sein. Die Elemente müssen auch nicht notwendig in einem einzigen Gehäuse angeordnet sein.

Nach einer Weiterbildung der Erfindung ist vorgesehen, dass die Luft aus dem Fahrgastraum durch wenigstens eine Öffnung in der Seitenwandung und / oder durch wenigstens eine Öffnung in der Deckenwandung, bevorzugt durch wenigstens eine Öffnung in der Deckenwandung, in den luftstromabwärts von der Wasserablassöffnung gelegenen Teilbereich strömt. Diese Weiterbildung der Erfindung ermöglicht eine besonders günstige Einleitung der Luft, die aus dem Fahrgastraum in den Wasserkasten strömt.

Nach einer Weiterbildung der Erfindung ist in der Bodenwandung und / oder in der Seitenwandung zudem wenigstens ein Notüberlauf und / oder wenigstens eine Notauslassöffnung vorgesehen. Bevorzugt ist der Notüberlauf und / oder die Notauslassöffnung derart in der Bodenwandung und / oder in der Seitenwandung angeordnet, dass der Notüberlauf und / oder die Notauslassöffnung zum Abscheiden von Wasser aus dem luftstromaufwärts von der wenigstens einen Wasserablassöffnung gelegenen Teilbereich geeignet ist. Diese Weiterbildung der Erfindung reduziert zusätzlich die Wahrscheinlichkeit, dass Schwallwasser in den luftstromabwärts von der Wasserablassöffnung gelegenen Teilbereich gelangen und von der Umluft aufgenommen werden kann. Die Notauslassöffnung und / oder der Notüberlauf üben primär ihre Funktion beispielsweise dann aus, falls die Wasserablassöffnung verstopft ist oder falls die Wasserablassöffnnung nicht genügend schnell das Wasser aus dem Wasserabscheideraum abscheiden kann, so dass sich das Wasser im Wasserabscheideraum aufstaut.

Nach einer Weiterbildung der Erfindung weist das Klimagerät einen Ventilator auf, mit dem im Wasserkasten ein Unterdruck erzeugbar ist.

Bevorzugt beginnt der luftstromabwärts von der Wasserablassöffnung gelegene Teilbereich bei mehr als einer in der Bodenwandung angeordneten Wasserablassöffnung an der der Luftauslassöffnung nächstgelegenen Wasserablassöffnung, bevorzugt an der der Luftaustrittsöffnung nächstgelegenen Wasserablassöffnung.

Nach einer Weiterbildung der Erfindung ist die Bodenwandung konisch ausgebildet.

Nach einer Weiterbildung der Erfindung ist die Wasserablassöffnung am tiefsten Punkt der Bodenwandung angeordnet. Diese Anordnung bewirkt eine optimale Wasserabscheidung aus dem Wasserkasten.

Weitere vorteilhafte Merkmale ergeben sich aus den abhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Fig. 1: schematisch einen Abschnitt eines Kraftfahrzeuges,
- Fig. 2: schematisch eine Variante des erfindungsgemässen Kraftfahrzeuges und
- Fig. 3: ebenfalls schematisch eine weitere Variante des erfindungsgemässen Kraftfahrzeuges.

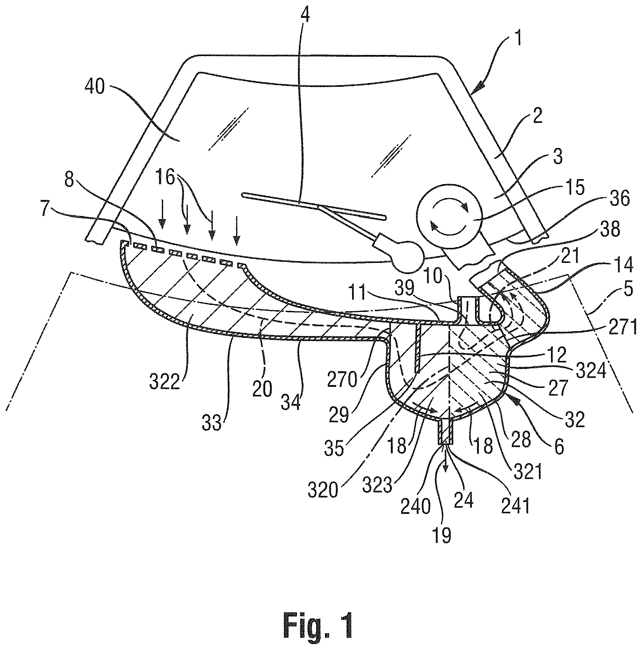

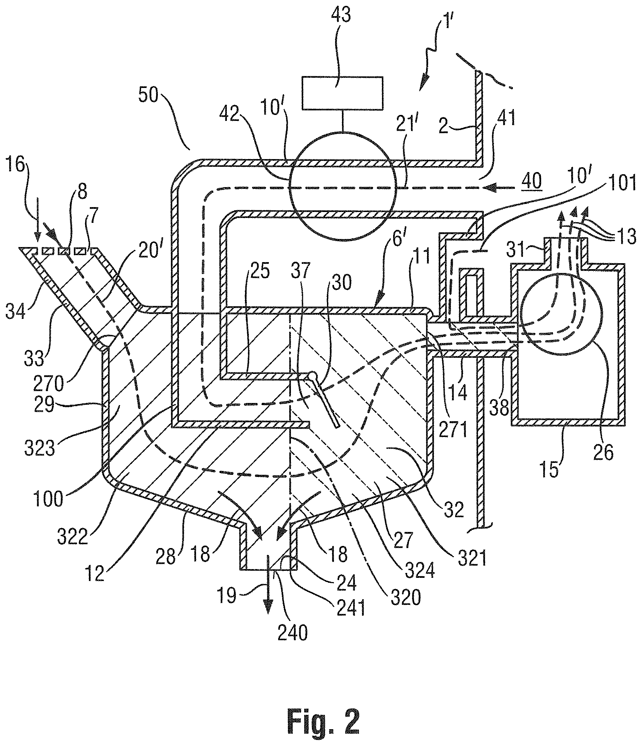

Das in Fig. 1 gezeigte Kraftfahrzeug 1 besitzt einen wie in Fig. 2 angedeuteten Fahrgastraum 40, eine Karosserie 2, an der eine Windschutzscheibe 3 befestigt ist. Diese kann in bekannter Weise mit einem Scheibenwischer 4 gereinigt werden. Unterhalb einer Unterkante 36 der Windschutzscheibe 3 ist unter einer hier lediglich angedeuteten Motorhaube 5 ein Wasserkasten 6 angeordnet, der eine Lufteinlassöffnung 7 aufweist, in die ein Gitter 8 eingesetzt ist, sowie eine Luftauslassöffnung 38 als auch eine Wasserablassöffnung 24 umfasst. Die kreisförmig ausgebildete Wasserablassöffnung 24 weist eine sich horizontal erstreckende Fläche 240 auf. Die Lufteinlassöffnung 7, die Luftauslassöffnung 38 sowie die Wasserablassöffnung 24 sind über einen Innenraum 32 des Wasserkastens 6 miteinander verbunden. Das Gitter 8 dient insbesondere zum Rückhalten von Schnee. Der Wasserkasten 6 weist eine konisch ausgebildete Bodenwandung 28, eine Seitenwandung 29 sowie eine Deckenwandung 11 auf, welche gemeinsam einen Wasserabscheideraum 27 begrenzen, welcher ein Teilbereich des Innenraumes 32 bildet. In der Seitenwandung 29 ist eine Lufteintrittsöffnung 270 sowie eine Luftaustrittsöffnung 271 angeordnet. Die Lufteintrittsöffnung 270 und die Luftaustrittsöffnung 271 sind einander gegenüberliegend sowie etwa auf gleicher Höhe angeordnet. Zudem sind die Lufteintrittsöffnung 270 und die Luftaustrittsöffnung 271, wie in Figur 1 ersichtlich, oberhalb der Wasserablassöffnung 24 angeordnet. Der Wasserabscheideraum 27 ist über die Luftaustrittsöffnung 271 sowie über einen ersten Kanal 14 mit der Luftauslassöffnung 38 verbunden, welche wiederum mit einem Klimagerät 15 verbunden ist, das hier beispielsweise im Fahrgastraum 40 angeordnet ist. Der Wasserabscheideraum 27 ist über die Lufteintrittsöffnung 270 sowie über einen zweiten Kanal 33 mit der Lufteinlassöffnung 7 verbunden. Das Klimagerät 15 besitzt in an sich bekannter Weise einen wie in Fig. 2 angedeuteten Ventilator 26 sowie einen hier nicht gezeigten Luftfilter, ein Heizelement sowie einen Verdampfer. Bei laufendem Ventilator 26 wird im Innenraum 32 des Wasserkastens 6 ein Unterdruck erzeugt und dadurch Frischluft an der Lufteinlassöffnung 7 angesaugt. Diese Frischluft gelangt über den zweiten Kanal 33, den Wasserabscheideraum 27, den ersten Kanal 14 sowie die Luftauslassöffnung 38 zum Klimagerät 15 und von diesem in den Fahrgastraum 40.

Der Wasserkasten 6 dient in an sich bekannter Weise zum Entfernen von Schwallwasser, das in Richtung der Pfeile 16 durch die Lufteinlassöffnung 7 in den Wasserkasten 6 gelangen kann. Dieses Wasser strömt durch den zweiten Kanal 33, der eine Wandung 34 aufweist, in den Wasserabscheideraum 27. An der tiefsten Stelle der Bodenwandung 28 ist die Wasserablassöffnung 24 angeordnet, durch welche das Wasser in Richtung des Pfeils 19 nach aussen abfliessen kann.

Der Innenraum 32 des Wasserkastens 6 besteht aus einem luftstromabwärts von der Wasserablassöffnung 24 gelegenen, mit gestrichelten Linien schraffierten, Teilbereich 321 sowie einem an den Teilbereich 321 unmittelbar anschliessenden luftstromaufwärts gelegenen und mit Volllinien schraffierten Teilbereich 322. Der Teilbereich 321 sowie der Teilbereich 322 grenzen unmittelbar an der strichpunktierten Ebene 320 aneinander, so dass die Teilbereiche 321 und 322 unmittelbar miteinander verbunden sind, so dass Luft und / oder Wasser direkt aus dem Teilbereich 322 in den Teilbereich 321 und umgekehrt strömen kann. Der luftstromabwärts von der Wasserablassöffnung 24 gelegene Teilbereich 321 ist unmittelbar mit dem Fahrgastraum 40 über einen Luftkanal 10 verbunden. Durch diese unmittelbare Verbindung strömt Luft aus dem Fahrgastraum 40 direkt in den luftstromabwärts von der Wasserablassöffnung 24 gelegenen Teilbereich 321. Die strichpunktierte Ebene 320 steht in einem Winkel von 90° zur sich horizontal erstreckenden Fläche 240 der Wasserablassöffnung 24 und erstreckt sich von der der Luftaustrittsöffnung 271 des Wasserabscheideraumes 27 nächstliegenden Kante 241 der Wasserablassöffnung 24 zur Deckenwandung 11. Die Anordnung der Ebene 320 relativ zur Wasserablassöffnung 24 reduziert die Wahrscheinlichkeit, dass die Umluft, beziehungsweise die über den Luftkanal 10 in den luftstromabwärts von der Wasserablassöffnung 24 gelegenen Teilbereich 321 eintretende Luft, Wasser aus dem durch die Lufteinlassöffnung 7 in den Innenraum 32 gelangenden Schwallwasser aufnehmen kann. Der luftstromaufwärts gelegene Teilbereich 322 ist unmittelbar mit der Lufteinlassöffnung 7 sowie unmittelbar mit der Wasserablassöffnung 24 verbunden. Der Teilbereich 321 ist unmittelbar mit der Luftauslassöffnung 38 verbunden sowie mittelbar über den Teilbereich 322 mit der Wasserablassöffnung 24 verbunden. Aufgrund der genannten mittelbaren Verbindung kann Luft und / oder Wasser nicht direkt vom luftstromabwärts von der Wasserablassöffnung 24 gelegenen Teilbereich 321, sondern nur indirekt, das heisst, über den luftstromaufwärts gelegenen Teilbereich 322, zur Wasserablassöffnung 24 gelangen. Der Teilbereich 321 ist durch die Deckenwandung 11, die Bodenwandung 28, die Seitenwandung 29 sowie den ersten Kanal 14 begrenzt. Der Teilbereich 322 ist von der Deckenwandung 11, der Seitenwandung 29, der Bodenwandung 28 sowie dem zweiten Kanal 33 begrenzt. Wie in Figur 1 ersichtlich, weist der luftstromabwärts von der Wasserablassöffnung 24 gelegene Teilbereich 321 einen im Wasserabscheideraum 27 angeordneten Raumabschnitt 324 auf. Der luftstromaufwärts von der Wasserablassöffnung 24 gelegene Teilbereich 322 umfasst einen im Wasserabscheideraum 27 angeordneten Raumabschnitt 323.

Bei einem Unterdruck im Innenraum 32, insbesondere im Wasserabscheideraum 27, wird über den Luftkanal 10, welcher über eine Ansaugöffnung 39 in den Wasserabscheideraum 27 mündet, Luft aus dem Fahrgastraum 40 in den Wasserabscheideraum 27, genauer gesagt, in den im Wasserabscheideraum 27 angeordnete Raumabschnitt 324 des luftstromabwärts von der Wasserablassöffnung 24 gelegenen Teilbereichs 321, angesaugt. Diese Luft gelangt schliesslich über den ersten Kanal 14 zum Klimagerät 15. Dieser Luftstrom ist mit der gestrichelten Linie 21 angedeutet. Somit wird gleichzeitig Luft aus dem Fahrgastraum 40 sowie Frischluft, welche mit der gestrichelten Linie 20 angedeutet ist, dem Innenraum 32, beziehungsweise dem luftstromabwärts von der Wasserablassöffnung 24 gelegenen Teilbereich 321, zugeführt. Die aus dem Fahrgastraum 40 über den Luftkanal 10 in den Innenraum 32 des Wasserkastens 6 transportierte Luft ist vergleichsweise zur Frischluft trockener, d.h. diese weist weniger Wasserdampf auf und ist auch tropfenärmer und weist insbesondere im Wesentlichen keine Tropfen auf.

Wie schon dargelegt und in Figur 1 ersichtlich, mündet der Luftkanal 10 über die Ansaugöffnung 39 in der Deckenwandung 11 in den Wasserabscheideraum 27, beziehungsweise in den luftstromabwärts von der Wasserablassöffnung 24 gelegenen Teilbereich 321 des Innenraumes 32. Diese über den Luftkanal 10 in den Teilbereich 321 einströmende Luft gelangt schliesslich über den ersten Kanal 14 zum Klimagerät 15. Dieser Luftstrom ist mit der gestrichelten Linie 21 angedeutet. Der mit der gestrichelten Linie 20 angedeutete Frischluftstrom strömt, wie in Figur 1 angedeutet, über die im Wasserabscheideraum 27 in der Bodenwandung 28 angeordneten Wasserablassöffnung 24 hinweg. Nach dem Überströmvorgang der Wasserablassöffnung 24 tritt die Frischluft in den Teilbereich 321 ein und vermischt sich im Teilbereich 321 mit der aus dem Fahrgastraum 40 über den Luftkanal 10 in den Teilbereich 321 des Wasserkastens 6 angesaugten Luft. Die vergleichsweise zur Frischluft trockene und tropfenarme Luft aus dem Fahrgastraum 40 wird im Wasserabscheideraum 27, beispielsweise durch eine Verwirbelung, innig mit der angesaugten Frischluft vermengt. Die angesaugte Frischluft und die Luft aus dem Fahrgastraum 40 können sich auch bereits im Bereich der Ansaugöffnung 39 mindestens teilweise vermengen. Durch die Verwirbelung beziehungsweise Vermengung werden eventuelle Wassertropfen der Frischluft durch die angesaugte Luft aus dem Fahrgastraum 40 aufgelöst. Eventuelle Schneepartikel werden geschmolzen und aufgelöst bzw. sublimiert. Die durch den ersten Kanal 14 zum Klimagerät 15 strömende Luft ist somit eine Mischung aus der an der Lufteinlassöffnung 7 angesaugten Frischluft und der Luft aus dem Fahrgastraum 40. Der Wassergehalt dieser Luft ist kleiner als derjenige der an der Lufteinlassöffnung 7 angesaugten Aussenluft bzw. Frischluft. Entsprechend sind weniger Wassertropfen vorhanden. Es besteht somit ein vergleichsweise geringes Risiko, dass der Luftfilter des Klimagerätes 15 feucht wird und sich in diesem Pilze ansiedeln können. Durch das Einströmen der Umluft, beziehungsweise durch das Einströmen der Luft aus dem Fahrgastraum 40 in den Teilbereich 321, ist zudem die Wahrscheinlichkeit reduziert, dass die Umluft, beziehungsweise die über den Luftkanal 10 in den Teilbereich 321 eintretende Luft, Wasser aus dem durch die Lufteinlassöffnung 7 in den Innenraum 32 gelangenden Schwallwasser aufnehmen kann, da das Schwallwasser wenigstens teilweise bereits den Wasserkasten 6 über die Wasserablassöffnung 24 verlassen hat. Somit ist die Umluft unverbrauchter und kann in der Frischluft vorhandene Tropfen besser auflösen.

Von der Deckenwandung 11 ragt eine zweite Tropfenabscheidevorrichtung 12 nach unten in den Teilbereich 322 des Innenraumes 32 beziehungsweise in den im Wasserabscheideraum 27 angeordneten Raumabschnitt 323 des luftstromaufärts von der Wasserablassöffnung 24 gelegenen Teilbereiches 322. Gemäss der gestrichelten Linie 20 wird der Frischluftstrom, welcher durch die Lufteinlassöffnung 7 angesaugt wird, an dieser zweiten Tropfenabscheidevorrichtung 12 umgelenkt, bevor dieser Frischluftstrom durch den ersten Kanal 14 zum Klimagerät 15 gelangt. Die zweite Tropfenabscheidevorrichtung 12 kann auch so ausgebildet sein, dass diese vom Frischluftstrom horizontal umströmt wird. Mit dem Frischluftstrom mitgerissene Wassertropfen können durch das Umlenken beziehungsweise durch das Umströmen aus der Frischluft abgeschieden werden und gelangen gemäss den Pfeilen 18 nach unten in die Wasserablassöffnung 24. Aufgrund der zweiten Tropfenabscheidevorrichtung 12 ist somit noch eine weitere Reduktion der Feuchtigkeit der Frischluft, wie beispielsweise in der Form von Wassertropfen, möglich. Aufgrund der Anordnung der zweiten Tropfenabscheidevorrichtung 12 im luftstromaufwärts gelegenen Teilbereich 322 des Innenraumes 32 kann in der Frischluft vorhandene Feuchtigkeit, wie insbesondere in der Form von Wassertropfen, aus der Frischluft vorabgeschieden werden, bevor die Frischluft mit der Umluft, beziehungsweise mit der aus dem Fahrgastraum 40 in den im Wasserabscheideraum 27 angeordneten Raumabschnitt 324 des luftstromabwärts von der Wasserablassöffnung 24 gelegenen Teilbereich 321 einströmenden Luft, in Kontakt kommen kann. Somit muss die Umluft weniger Tropfen auflösen, beziehungsweise die Umluft kann die in der Frischluft noch vorhandenen Wassertropfen besser auflösen. Zudem sei erwähnt, dass die zweite Tropfenabscheidevorrichtung 12 nicht zwingend ist. Möglich ist somit auch ein Wasserkasten 6, der keine Tropfenabscheidevorrichtung 12 aufweist. Die zweite Tropfenabscheidevorrichtung 12 kann auch kürzer sein, so dass die Kante 35 näher bei der Deckenwandung 11 ist.

Beim in Fig. 2 gezeigten Kraftfahrzeug 1' ist ein Bereich des Fahrgastraumes 40 gezeigt, welcher über eine Karosserie 2 vom Motorraum 50 getrennt ist. Im Motorraum 50 ist ein Wasserkasten 6' angeordnet, der eine Lufteinlassöffnung 7 aufweist, in die ein Gitter 8 eingesetzt ist, sowie eine Luftauslassöffnung 38 als auch eine Wasserablassöffnung 24 umfasst. Die kreisförmig ausgebildete Wasserablassöffnung 24 weist eine sich horizontal erstreckende Fläche 240 auf. Die Lufteinlassöffnung 7, die Luftauslassöffnung 38 sowie die Wasserablassöffnung 24 sind über einen Innenraum 32 des Wasserkastens 6' miteinander verbunden. Das Gitter 8 dient insbesondere zum Rückhalten von Schnee. Der Wasserkasten 6' weist eine Bodenwandung 28, eine Seitenwandung 29 sowie eine Deckenwandung 11 auf, welche gemeinsam einen Wasserabscheideraum 27 begrenzen, wobei der Wasserabscheideraum 27 einen Teilbereich des Innenraumes 32 bildet. Der Wasserabscheideraum 27 ist über eine in der Seitenwandung 29 angeordnete Luftaustrittsöffnung 271 sowie über einen ersten Kanal 14 mit der Luftauslassöffnung 38 verbunden, welche wiederum mit einem Klimagerät 15 verbunden ist, das hier beispielsweise im Fahrgastraum 40 angeordnet ist. Der Wasserabscheideraum 27 über eine in der Seitenwandung 29 angeordnete Lufteintrittsöffnung 270 sowie über einen zweiten Kanal 33 mit der Lufteinlassöffnung 7 verbunden. Das Klimagerät 15 besitzt in an sich bekannter Weise einen in Fig. 2 angedeuteten Ventilator 26 sowie einen hier nicht gezeigten Luftfilter, ein Heizelement sowie einen Verdampfer. Bei laufendem Ventilator 26 wird im Innenraum 32 des Wasserkastens 6' ein Unterdruck erzeugt und dadurch Frischluft an der Lufteinlassöffnung 7 angesaugt. Diese Frischluft gelangt über den zweiten Kanal 33, den Wasserabscheideraum 27, den ersten Kanal 14 sowie die Luftauslassöffnung 38 zum Klimagerät 15 und von diesem in den Fahrgastraum 40.

Der Wasserkasten 6' dient in an sich bekannter Weise zum Entfernen von Schwallwasser, das in Richtung des Pfeils 16 durch die Lufteinlassöffnung 7 in den Wasserkasten 6' gelangen kann. Dieses Wasser strömt durch den zweiten Kanal 33, der eine Wandung 34 aufweist, in den Wasserabscheideraum 27. An der tiefsten Stelle der Bodenwandung 28 ist die Wasserablassöffnung 24 angeordnet, durch welche das Wasser in Richtung des Pfeils 19 nach aussen abfliessen kann.

Der Innenraum 32 besteht aus einem luftstromabwärts von der Wasserablassöffnung 24 gelegenen, mit gestrichelten Linien schraffierten, Teilbereich 321, sowie einem an den Teilbereich 321 unmittelbar anschliessenden luftstromaufwärts gelegenen, mit Volllinien schraffierte, Teilbereich 322. Der Teilbereich 321 sowie der Teilbereich 322 grenzen unmittelbar an der strichpunktierten Ebene 320, aneinander, so dass die Teilbereiche 321 und 322 unmittelbar miteinander verbunden sind, so dass Luft und / oder Wasser direkt aus dem Teilbereich 322 in den Teilbereich 321 und umgekehrt strömen kann. Die strichpunktierte Ebene 320 steht in einem Winkel von 90° zur sich horizontal erstreckenden Fläche 240 der Wasserablassöffnung 24 und erstreckt sich von der der Luftaustrittsöffnung 271 nächstliegenden Kante 241 der Wasserablassöffnung 24 zur Deckenwandung 11. Der luftstromaufwärts gelegene Teilbereich 322 ist unmittelbar mit der Lufteinlassöffnung 7 sowie unmittelbar mit der Wasserablassöffnung 24 verbunden. Der Teilbereich 321 ist unmittelbar mit der Luftauslassöffnung 38 verbunden sowie mittelbar über den Teilbereich 322 mit der Wasserablassöffnung 24 verbunden. Der Teilbereich 321 ist von der Deckenwandung 11, der Bodenwandung 28, der Seitenwandung 29 sowie dem ersten Kanal 14 begrenzt. Der Teilbereich 322 ist von der Deckenwandung 11, der Seitenwandung 29, der Bodenwandung 28 sowie dem zweiten Kanal 33 begrenzt. Wie in Figur 2 ersichtlich, weist der luftstromabwärts von der Wasserablassöffnung 24 gelegene Teilbereich 321 einen im Wasserabscheideraum 27 angeordneten Raumabschnitt 324 auf. Der luftstromaufwärts von der Wasserablassöffnung 24 gelegene Teilbereich 322 umfasst einen im Wasserabscheideraum 27 angeordneten Raumabschnitt 323.

Beim Kraftfahrzeug 1' gemäss Fig. 2 wird in den luftstromabwärts von der Wasserablassöffnung 24 gelegenen Teilbereich 321, bei laufendem Ventilator 26, über einen ersten Luftkanal 10' Luft aus dem Fahrgastraum 40 zugeführt. Wie in Figur 2 ersichtlich, ist der Fahrgastraum 40 ummittelbar über den ersten Luftkanal 10' mit dem luftstromabwärts von der Wasserablassöffnung 24 gelegenen Teilbereich 321 verbunden. Somit strömt Luft aus dem Fahrgastraum 40, aufgrund dieser unmittelbaren Verbindung, direkt in den luftstromabwärts von der Wasserablassöffnung 24 gelegenen Teilbereich 321. Die genannte aus dem Fahrgastraum 40 zugeführte Luft, beziehungsweise der entsprechende Luftstrom, gelangt gemäss der gestrichelten Linie 21' durch eine Öffnung 41 der Karosserie 2 in den ersten Luftkanal 10' und strömt über einen durch die Deckenwandung 11 sich hindurcherstreckenden und im Wesentlichen im Teilbereich 322 angeordneten Abschnitt 100 des ersten Luftkanals 10', welcher als Bogen 25 ausgebildet ist, unterhalb der Deckenwandung 11 durch eine im Teilbereich 321 angeordnete Luftausgangsöffnung 37 des Bogens 25 horizontal in den Teilbereich 321. Wie in Figur 2 ersichtlich, ist die Luftausgangsöffnung 37 luftstromabwärts ausgerichtet. Die Luftausgangsöffnung 37 ist mit einer Klappe 30 verschliessbar. Die Klappe 30 ist am Bogen 25 des ersten Luftkanals 10' schwenkbar befestigt. Sie kann so ausgebildet sein, dass sie bei einem Unterdruck im Innenraum 32, insbesondere im Wasserabscheideraum 27, selbsttätig in die in Fig. 2 gezeigte Position verschwenkt wird. Die Klappe 30 oder ein anderes Ventil kann aber auch gesteuert sein. Die Klappe 30 bzw. das Ventil ist jedoch nicht zwingend. Die an der Öffnung 41 angesaugte Luft gelangt in den ersten Kanal 14 sowie über die Luftauslassöffnung 38 in das Klimagerät 15 von welchem die angesaugte Luft gemäss dem Pfeil 13 über den Luftauslass 31 in den Fahrgastraum 40 gelangt. Die an der Lufteinlassöffnung 7 angesaugte Frischluft gelangt gemäss der gestrichelten Linie 20' ebenfalls in den ersten Kanal 14 und schliesslich durch die Luftauslassöffnung 38 zum Klimagerät 15. Die an der Öffnung 41 angesaugte Luft und die an der Lufteinlassöffnung 7 angesaugte Frischluft vermischen sich teilweise im luftstromaufwärts von der Wasserablassöffnung 24 gelegenen Teilbereich 321. Aufgrund dieses Vermischungsvorgangs kann die aus dem Fahrgastraum 40 stammende Luft in der Frischluft vorhandene Wassertropfen auflösen.

Bei der Ausführungsform des erfindungsgemässen Kraftfahrzeuges 1' gemäss Figur 2 bildet der Abschnitt 100 des ersten Luftkanal 10', beziehungsweise der Bogen 25, eine erste Tropfenabscheidevorrichtung 12 welche vom Frischluftstrom 20' umströmt wird. Die oben erläuterten Wirkungen bezüglich der Verminderung der Feuchtigkeit und Anzahl der Tropfen durch in der schliesslich in das Klimagerät 15 gelangenden Luft sind auch hier vorhanden. In dem das Gitter 8 mit einer grösseren Maschenbreite ausgebildet oder sogar weggelassen wird, kann der Strömungswiderstand weiter vermindert werden. Im ersten Luftkanal 10' ist ein Luftfördermittel 42 angeordnet, das von einer Steuervorrichtung 43 gesteuert ist. Damit kann die Zuführung der Luftmenge vom Fahrgastraum 40 in den Wasserkasten 6' gesteuert werden. Die erste Tropfenabscheidevorrichtung 12 hat somit einerseits die Funktion, Luft aus dem Fahrgastraum 40 in den luftstromabwärts von der Wasserablassöffnung 24 gelegenen Teilbereich 321 zu transportieren, welche Luft in der Frischluft vorhandene Wassertropfen auflösen kann, und andererseits die weitere Funktion, aus der durch den Innenraum 32 des Wasserkastens 6' hindurchströmenden Frischluft Wassertropfen abzuscheiden, indem die hindurchströmende Frischluft die erste Tropfenabscheidevorrichtung 12 umströmt.

Das Kraftfahrzeug 1' weist zudem einen zweiten Luftkanal 10' auf, über welchen der Fahrgastraum 40 unmittelbar mit dem luftstromabwärts von der Wasserablassöffnung 24 gelegenen Teilbereich 321 verbunden ist. Die Luft aus dem Fahrgastraum 40 strömt somit, aufgrund dieser unmittelbaren Verbindung, direkt in den luftstromabwärts von der Wasserablassöffnung 24 gelegenen Teilbereich 321. Der zweite Luftkanal 10' mündet, wie in Figur 2 ersichtlich, in den ersten Kanal 14, welcher den luftstromabwärts von der Wasserablassöffnung 24 gelegenen Teilbereich 321 teilweise begrenzt. Durch diesen zweiten Luftkanal 10' strömt Luft aus dem Fahrgastraum 40, beziehungsweise Umluft, wie mit Pfeil 101 angedeutet, in den ersten Kanal 14 und vermischt sich mit der durch den ersten Kanal 14 hindurchströmenden Luft und löst wenigstens teilweise in der hindurchströmenden Luft enthaltene Tropfen auf. Durch das Vorsehen des ersten Luftkanales 10' sowie des zweiten Luftkanales 10' wird die Wahrscheinlichkeit erhöht, dass Tropfen, welche in der Luft enthalten sind, die über die Klimaanlage 15 dem Fahrgastraum 40 zuzuführen ist, wenigstens teilweise aufgelöst werden.

Die vom Klimagerät 15 abgegebene Luft gelangt gemäss den Pfeilen 13 durch einen Luftauslass 31 oder auch durch mehrere hier nicht gezeigte Luftauslassöffnungen in den Fahrgastraum 40. Ein Teil dieser Luft wird, wie oben erwähnt, über den ersten Luftkanal 10' und / oder über den zweiten Luftkanal 10' wieder dem Wasserkasten 6' zugeführt. Ist das Klimagerät 15 in Betrieb, so besteht dauernd ein Kreislauf von Umluft, die vom Fahrgastraum 40 durch den ersten Luftkanal 10' und / oder den zweiten Luftkanal 10' in den Wasserkasten 6' und durch das Klimagerät 15 sowie den Luftauslass 31 wieder in den Fahrgastraum 40 gelangt.

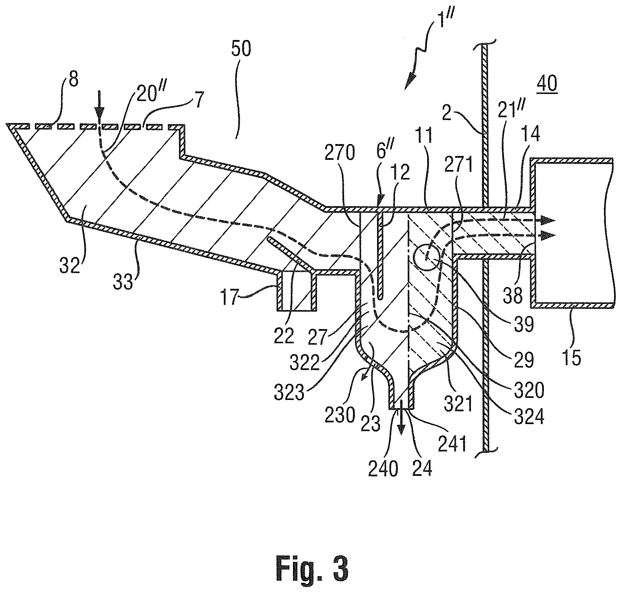

Das in Fig. 3 gezeigte Kraftfahrzeug 1" besitzt einen Wasservorabscheideablauf 17, über dem eine Leitwand 22 angeordnet ist. Durch diesen Wasservorabscheideablauf 17 kann wenigstens ein Teil des Wassers abgeleitet werden, das durch eine Lufteinlassöffnung 7 in einen Wasserkasten 6" gelangt. Durch den Wasservorabscheideablauf 17 kann über die Lufteinlassöffnung 7 in einen Innenraum 32 eintretendes Schwallwasser aus dem Wasserkasten 6" abgeschieden werden, bevor dieses in einen Wasserabscheideraum 27 eintreten kann. Zusätzlich ist eine Notablauföffnung 23 vorgesehen, über welche, wie mit Pfeil 230 angedeutet, Wasser aus dem Innenraum 32 abfliessen kann, falls die Wasserablassöffnung 24 beispielsweise verstopft ist oder die Wasserablassöffnung 24 beim Wasserablass überlastet ist. Die Notablauföffnung 23 ist mit einem in Figur 3 nicht dargestellten Ventil versehen, welches die Notablauföffnung 23 versperren und wieder freigeben kann, so dass keine unerwünschte Luft über die Notablauföffnung 23 in den Innenraum 32 einströmen kann. Ist das Klimagerät 15 in Betrieb, so wird durch die Lufteinlassöffnung 7 Frischluft in den Wasserkasten 6" gesaugt. Diese gelangt gemäss der gestrichelten Linie 20" über einen zweiten Kanal 33 sowie einer Lufteintrittsöffnung 270 in den Wasserabscheideraum 27 und umströmt eine in einem luftstromaufwärts von der Wasserablassöffnung 24 gelegenen Teilbereich 322, welcher mit Volllinien schraffiert ist, angeordnete zweite Tropfenabscheidevorrichtung 12. Der Wasserkasten 6" weist zudem einen luftstromabwärts von der Wasserablassöffnung 24 gelegenen Teilbereich 321 auf, welcher unmittelbar an den Teilbereich 322 anschliesst. Der Teilbereich 321 ist mit gestrichelten Linien schraffiert. Wie in Figur 3 ersichtlich, besteht der Innenraum 32 aus dem luftstromaufwärts von der Wasserablassöffnung 24 gelegenen Teilbereich 322 sowie dem luftstromabwärts von der Wasserablassöffnung 24 gelegenen Teilbereich 321. Der Teilbereich 321 sowie der Teilbereich 322 grenzen unmittelbar an der strichpunktierten Ebene 320, aneinander, so dass die Teilbereiche 321 und 322 unmittelbar miteinander verbunden sind, so dass Luft und / oder Wasser direkt aus dem Teilbereich 322 in den Teilbereich 321 und umgekehrt strömen kann. Die strichpunktierte Ebene 320 steht in einem Winkel von 90° zur horizontal sich erstreckenden Fläche 240 der kreisförmigen Wasserablassöffnung 24 und erstreckt sich von der einer Luftaustrittsöffnung 271 des Wasserabscheideraumes 27 nächstliegenden Kante 241 der Wasserablassöffnung 24 zu einer Deckenwandung 11 des Wasserkastens 6". Der luftstromabwärts von der Wasserablassöffnung 24 gelegene Teilbereich 321 ist unmittelbar über einen nicht dargestellten Luftkanal sowie einer in einer Seitenwandung 29 des Wasserkastens 6" vorgesehenen Ansaugöffnung 39 mit dem luftstromabwärts von der Wasserablassöffnung 24 gelegenen Teilbereich 321 verbunden. Durch diese unmittelbare Verbindung kann Luft aus dem Fahrgastraum 40 direkt in den luftstromabwärts von der Wasserablassöffnung 24 gelegene Teilbereich 321 einströmen.

Die genannte aus dem Fahrgastraum 40 angesaugte Luft gelangt, wie mit der gestrichelten Linie 21" angedeutet, schliesslich zusammen mit der von der Lufteinlassöffnung 7 angesaugten Frischluft, welche mit der gestrichelten Linie 20" angedeutet ist, zum Klimagerät 15. Der oben erwähnte Kreislauf der Umluft findet auch hier statt. Entsprechend kann dem Klimagerät 15 vergleichsweise trockene und tropfenarme Luft zugeführt werden. Der oben genannte Wasservorabscheideablauf 17 bewirkt zudem den Vorteil, dass die Wahrscheinlichkeit reduziert ist, dass die aus dem Fahrgastraum 40 in den Wasserabscheideraum 27 eintretende Luft, beziehungsweise die Umluft, Wasser aus im Wasserabscheideraum 27 angeordneten Schwallwasser aufnehmen kann.

Selbstverständlich ist die hier beschriebene Erfindung nicht auf die erwähnten Ausführungsformen beschränkt und eine Vielzahl von Abwandlungen ist möglich. So muss beispielsweise die Wasserablassöffnung 24 der Wasserkästen 6, 6' und 6" nicht zwingend kreisförmig sein, sondern kann auch eine andere Form aufweisen. Die Bodenwandung 28, die Seitenwandung 29, die Deckenwandung 11, der erste Kanal 14 sowie der zweite Kanal 33 der Wasserkästen 6, 6', 6" kann selbstverständlich auch anders ausgestaltet sein. Zudem muss die erste Tropfenabscheidevorrichtung 12 des Wasserkasten 6' sowie die zweite Tropfenabscheidevorrichtung 12 der Wasserkästen 6, 6" nicht zwingend im Wasserabscheideraum 27 angeordneten Raumabschnitt 323 des luftstromaufwärts von der Wasserablassöffnung 24 gelegenen Teilbereichs 322 angeordnet sein, sondern kann auch im Wasserabscheideraum 27 angeordnete Raumabschnitt 324 des luftstromabwärts von der Wasserablassöffnung 24 gelegenen Teilbereichs 321 angeordnet sein, wobei im Falle der ersten Tropfenabscheidevorrichtung 12 die Luftausgangsöffnung 37 stets im Teilbereich 321 angeordnet ist. Selbstverständlich kann die zweite Tropfenabscheidevorrichtung 12 auch ausserhalb des Wasserabscheideraumes 27 im Teilbereich 321 oder im Teilbereich 322 angeordnet sein. Die erste Tropfenabscheidevorrichtung 12 kann ebenfalls ausserhalb des Wasserabscheideraumes 27 im Teilbereich 321 oder im Teilbereich 322 angeordnet sein, wobei die Luftausgangsöffnung 37 stets im Teilbereich 321 angeordnet ist. Die erste Tropfenabscheidevorrichtung 12 des Wasserkasten 6' muss nicht zwingend, wie in Figur 2 dargestellt, ausgebildet sein, sondern kann auch anders ausgebildet sein. Ebenso muss die zweite Tropfenabscheidevorrichtung 12 der Wasserkästen 6, 6" nicht zwingend, wie in den Figuren 1, 3 dargestellt, ausgebildet sein, sondern kann auch anders ausgestaltet sein. Des Weiteren kann bei den Wasserkästen 6, 6', 6" die Lufteintrittsöffnung 270 die Lufteinlassöffnung 7 bilden und / oder bei den Wasserkästen 6, 6', 6" kann die Luftaustrittsöffnung 271 die Luftauslassöffnung 38 bilden. Selbstverständlich können die Wasserkästen 6, 6' auch einen Wasservorabscheideablauf 17 aufweisen. Die Wasserkästen 6, 6" können ausserdem, zusätzlich zur zweiten Tropfenabscheidevorrichtung 12, oder anstatt der zweiten Tropfenabscheidevorrichtung 12, eine erste Tropfenabscheidevorrichtung 12 aufweisen. Entsprechend kann der Wasserkasten 6', zusätzlich zur ersten Tropfenabscheidevorrichtung 12, oder anstatt der ersten Tropfenabscheidevorrichtung 12, eine zweite Tropfenabscheidevorrichtung 12 aufweisen. Der Luftkanal 10 des Wasserkasten 6 sowie der Luftkanal 10" des Wasserkasten 6" kann ausserdem auch das Ventil des Wasserkastens 6', wie beispielsweise in der Form einer Klappe 30, aufweisen, welches bevorzugt gesteuert ist. Ebenfalls kann der Luftkanal 10 des Wasserkastens 6 sowie der Luftkanal 10" des Wasserkasten 6" ein Luftfördermittel 42 umfassen.

Die verschiedenen Elemente der in den Figuren 1 bis 3 gezeigten Ausführungsformen können zudem selbstverständlich beliebig miteinander kombiniert werden. Eine Vielzahl weiterer Abwandlungen ist denkbar.

**BEZUGSZEICHENLISTE**

| | | | |
|---|---|---|---|
| 1, 1', 1" | Kraftfahrzeug | 27 | Wasserabscheideraum |
| 2 | Karosserie | 270 | Lufteintrittsöffnung |
| 3 | Windschutzscheibe | 271 | Luftaustrittsöffnung |
| 4 | Scheibenwischer | 28 | Bodenwandung |
| 5 | Motorhaube | 29 | Seitenwandung |
| 50 | Motorraum | 30 | Klappe |
| 6, 6', 6" | Wasserkasten | 31 | Luftauslass |
| 7 | Lufteinlassöffnung | 32 | Innenraum |
| 8 | Gitter | 320 | strichpunktierte Ebene |
| 10, 10' | Luftkanal | 321 | luftstromabwärts von der Wasserablassöffnung 24 gelegener Teilbereich |
| 100 | Abschnitt des Luftkanals 10' | | |
| 101 | Pfeil | | |
| 11 | Deckenwandung | 322 | luftstromaufwärts von der Wasserablassöffnung 24 gelegener Teilbereich |
| 12 | Tropfenabscheidevorrichtung | | |
| 13 | Pfeil | | |
| 14 | erster Kanal | 323 | im Wasserabscheideraum 27 angeordneter Raumabschnitt des luftstromaufwärts von der Wasserablassöffnung 24 gelegener Teilbereich 322 |
| 15 | Klimagerät | | |
| 16 | Pfeil | | |
| 17 | Wasservorabscheideablauf | | |
| 18 | Pfeil | | |
| 19 | Pfeil | 324 | im Wasserabscheideraum 27 angeordneter Raumabschnitt des luftstromabwärts von der Wasserablassöffnung 24 gelegenen Teilbereich 321 |
| 20 | Frischluftstrom | | |
| 21 | Luftstrom | | |
| 22 | Leitwand | | |
| 23 | Notablauföffnung | | |
| 230 | Pfeil | 33 | zweiter Kanal |
| 24 | Wasserablassöffnung | 34 | Wandung |
| 240 | Fläche | 35 | Kante |
| 241 | Kante | 36 | Unterkante |
| 25 | Bogen | 37 | Luftausgangsöffnung |
| 26 | Ventilator | 38 | Luftauslassöffnung |
| 39 | Ansaugöffnung | 42 | Luftfördermittel |
| 40 | Fahrgastraum | 43 | Steuervorrichtung |
| 41 | Öffnung | 50 | Motorraum |

## Patentansprüche

1. Kraftfahrzeug mit einen Fahrgastraum (40), einem Wasserkasten (6, 6', 6") und einem Klimagerät (15), das mit dem Wasserkasten (6, 6', 6") verbunden ist, welcher einen Innenraum (32) umfassend einen Wasserabscheideraum (27), eine Lufteinlassöffnung (7), eine Luftauslassöffnung (38) sowie eine Wasserablassöffnung (24) zum Ausscheiden von Wasser aus dem Wasserabscheideraum (27) aufweist, wobei die Lufteinlassöffnung (7), die Luftauslassöffnung (38) sowie die Wasserablassöffnung (24) über den Innenraum (32) miteinander verbunden sind, wobei an der Lufteinlassöffnung (7) mittels des Klimagerätes (15) Frischluft ansaugbar ist, die durch den mit der Lufteinlassöffnung (7) sowie mit der Luftauslassöffnung (38) verbundenen und von einer Bodenwandung (28), einer Seitenwandung (29) sowie einer Deckenwandung (11) begrenzten Wasserabscheideraum (27) sowie über die Luftauslassöffnung (38) zum Klimagerät (15) und von diesem in den Fahrgastraum (40) strömt, wobei der Innenraum (32) mit dem Fahrgastraum (40) verbunden ist, so dass bei Betrieb des Klimagerätes (15) Luft aus dem Fahrgastraum (40) und gleichzeitig Frischluft dem Innenraum (32) zuführbar ist, wobei in der Bodenwandung (28) die Wasserablassöffnung (24) zum Ausscheiden von Wasser aus dem Wasserabscheideraum (27) angeordnet ist, und wobei der Innenraum (32) aus einem luftstromabwärts von der Wasserablassöffnung (24) gelegenen Teilbereich (321) sowie einem luftstromaufwärts von der Wasserablassöffnung (24) gelegenen Teilbereich (322) besteht, **dadurch gekennzeichnet, dass** das Kraftfahrzeug (1, 1', 1") einen Luftkanal (10') aufweist, über welchen der luftstromabwärts von der Wasserablassöffnung (24) gelegene Teilbereich (321) unmittelbar mit dem Fahrgastraum (40) verbunden ist, und dass dieser Luftkanal (10') einen Abschnitt (100) aufweist, welcher eine Luftausgangsöffnung (37) umfasst, wobei der Abschnitt (100) in den Innenraum (32) ragt sowie eine erste Tropfenabscheidevorrichtung (12) bildet, wobei die Luftausgangsöffnung (37) im luftstromabwärts von der Wasserablassöffnung (24) gelegenen Teilbereich (321) angeordnet ist.

2. Kraftfahrzeug nach Anspruch 1, **dadurch gekennzeichnet, dass** der im Wasserabscheideraum (27) angeordnete Raumabschnitt (324) des luftstromabwärts von der Wasserablassöffnung (24) gelegenen Teilbereichs (321) unmittelbar mit dem Fahrgastraum (40) verbunden ist.

3. Kraftfahrzeug nach Anspruch 1 oder 2, **dadurch gekennzeichnet, dass** der Abschnitt (100) des Luftkanals (10') in den Wasserabscheideraum (27) ragt.

4. Kraftfahrzeug nach einem der vorhergehenden Ansprüche, **dadurch gekennzeichnet, dass** der Abschnitt (100) wenigstens teilweise im luftstromaufwärts von der Wasserablassöffnung (24) gelegenen Teilbereich (322), bevorzugt im Wesentlichen im luftstromaufwärts von der Wasserablassöffnung (24) gelegenen Teilbereich (322), angeordnet ist.

5. Kraftfahrzeug nach einem der vorhergehenden Ansprüche, **dadurch gekennzeichnet, dass** die Luftausgangsöffnung (37) luftstromabwärts ausgerichtet ist.

6. Kraftfahrzeug nach einem der vorhergehenden Ansprüche, **dadurch gekennzeichnet, dass** der Luftkanal (10') ein Ventil (30) aufweist, das beim Ansaugen von Luft aus dem Fahrgastraum (40) geöffnet ist.

7. Kraftfahrzeug nach Anspruch 6, **dadurch gekennzeichnet, dass** das Ventil (30) gesteuert ist.

8. Kraftfahrzeug nach einem der vorhergehenden Ansprüche, **dadurch gekennzeichnet, dass** der Luftkanal (10') ein Luftfördermittel (42) aufweist zur Steuerung der Zuführung der Luftmenge vom Fahrgastraum (40) in den Wasserkasten (6').

9. Kraftfahrzeug nach einem der vorangehenden Ansprüche, **dadurch gekennzeichnet, dass** im luftstromabwärts von der Wasserablassöffnung (24) gelegenen Teilbereich (321) und / oder im luftstromaufwärts von der Wasserablassöffnung (24) gelegenen Teilbereich (322), bevorzugt im luftstromaufwärts von der Wasserablassöffnung (24) gelegenen Teilbereich (322), bevorzugter im Wasserabscheideraum (27) angeordneten Raumabschnitt (323) des luftstromaufwärts von der Wasserablassöffnung (24) gelegenen Teilbereichs (322), eine zweite Tropfenabscheidevorrichtung (12) angeordnet ist, die von der angesaugten Frischluft umströmt wird.

10. Kraftfahrzeug nach Anspruch 9, **dadurch gekennzeichnet, dass** die zweite Tropfenabscheidevorrichtung (12) an der Deckenwandung (11) angeordnet ist und nach unten in den Wasserabscheideraum (27) ragt und / oder dass die zweite Tropfenabscheidevorrichtung (12) an der Seitenwandung (29) angeordnet ist und in den Wasserabscheideraum (27) ragt.

11. Kraftfahrzeug nach einem der vorangehenden Ansprüche, **dadurch gekennzeichnet, dass** der Wasserabscheideraum (27) über einen ersten Kanal (14) mit der Luftauslassöffnung (38) verbunden ist, wobei der erste Kanal (14) unmittelbar mit dem Fahrgastraum (40) verbunden ist, so dass bei Betrieb des Klimagerätes (15) Luft aus dem Fahrgastraum (40) und gleichzeitig Frischluft dem ersten Kanal (14) zuführbar ist.

12. Kraftfahrzeug nach einem der vorangehenden Ansprüche, **dadurch gekennzeichnet, dass** der Wasserabscheideraum (27) über einen zweiten Kanal (33) mit der Lufteinlassöffnung (7) verbunden ist, wobei bevorzugt der zweite Kanal (33) einen Wasservorabscheideablauf (17) aufweist.

13. Kraftfahrzeug nach einem der vorangehenden Ansprüche, **dadurch gekennzeichnet, dass** das Klimagerät (15) im Fahrgastraum (40) angeordnet ist und der Wasserkasten (6, 6', 6") im Motorraum (50) angeordnet ist.

14. Kraftfahrzeug nach einem der vorangehenden Ansprüche, **dadurch gekennzeichnet, dass** die Luft aus dem Fahrgastraum (40) durch eine Öffnung (39) in der Seitenwandung (29) und / oder durch eine Öffnung (39) in der Deckenwandung (11), bevorzugt durch eine Öffnung (39) in der Deckenwandung (11), in den luftstromabwärts von der Wasserablassöffnung (24) gelegenen Teilbereich (321) strömt.

15. Kraftfahrzeug nach Anspruch 1 oder 2, **dadurch gekennzeichnet, dass** im Innenraum (32), insbesondere im Wasserabscheideraum (27), keine zweite Tropfenabscheidevorrichtung (12) angeordnet ist.

## Claims

1. Motor vehicle with a passenger compartment (40), a water box (6, 6', 6") and an air conditioner (15) which is connected to the water box (6, 6', 6") which comprises an inner space (32) including a water separating space (27), an air inlet opening (7), an air outlet opening (38) and a water discharge opening (24) for discharging water from the water separating space (27), wherein the air inlet opening (7), the air outlet opening (38) and the water discharge opening (24) are connected with each other by means of the inner space (32), wherein fresh air can be aspirated on the air inlet opening (7) by means of the air conditioner (15), which fresh air streams through the water separating space (27), which is connected to the air inlet opening (7) and to the air outlet opening (38) and is limited by a bottom wall (28), a side wall (29) and a top wall (11), and via the air outlet opening (38) to the air conditioner (15) and from the later into the passenger compartment (40), wherein the inner space (32) is connected to the passenger compartment (40), such that in operation of the air conditioner (15) at the same time air from the passenger compartment (40) and fresh air can be lead into the inner space (32), wherein the water discharge opening (24) for discharging water from the water separating space (27) is arranged in the bottom wall (28), and wherein the inner space (32) consists of a subarea (321) which is arranged, in direction of the air stream, downstream of the water discharge opening (24) and of a subarea (322) which is arranged, in direction of the air stream, upstream of the water discharge opening (24), **characterized in that** the motor vehicle (1, 1', 1") comprises an air channel (10') by means of which the subarea (321) which is arranged, in direction of the air stream, downstream of the water discharge opening (24) is directly connected to the passenger compartment (40), and that this air channel (10') comprises a portion (100) which includes an air exit opening (37), wherein the portion (100) protrudes into the inner space (32) and forms a first droplet separation device (12), wherein the air exit opening (37) is arranged in the subarea (321) which is arranged, in direction of the air stream, downstream of the water discharge opening (24).

2. Motor vehicle according to claim 1, **characterized in that** the space portion (324), which is arranged in the water separating space (27), of the subarea (321) which is arranged, in direction of the air stream, downstream of the water discharge opening (24) is directly connected to the passenger compartment (40).

3. Motor vehicle according to claim 1 or 2, **characterized in that** the portion (100) of the air channel (10') protrudes into the water separating space (27).

4. Motor vehicle according to one of the preceding claims, **characterized in that** the portion (100) is arranged at least partly in the subarea (322) which is arranged, in direction of the air stream, upstream of the water discharge opening (24), preferably essentially in the subarea (322) which is arranged, in direction of the air stream, upstream of the water discharge opening (24).

5. Motor vehicle according to one of the preceding claims, **characterized in that** the air exit opening (37) is directed in in the air downstream direction.

6. Motor vehicle according to one of the preceding claims, **characterized in that** the air channel (10') comprises a valve (30) which is open when air is aspirated from the passenger compartment (40).

7. Motor vehicle according to claim 6, **characterized in that** the valve (30) is controlled.

8. Motor vehicle according to one of the preceding claims, **characterized in that** the air channel (10') comprises an air conveying means (42) for controlling the supply of the amount of air from the passenger compartment (40) into the water box (6').

9. Motor vehicle according to one of the preceding claims, **characterized in that** in the subarea (321) which is arranged, in direction of the air stream, downstream of the water discharge opening (24) and / or in the subarea (322) which is arranged, in direction of the air stream, upstream of the water discharge opening (24), preferably in the subarea (322) which is arranged, in direction of the air stream, upstream of the water discharge opening (24), more preferably in the space portion (323), which is arranged in the water separating space (27), of the subarea (322) which is arranged, in direction of the air stream, upstream of the water discharge opening (24), a second droplet separation device (12) is arranged around which the aspirated fresh air streams.

10. Motor vehicle according to claim 9, **characterized in that** the second droplet separation device (12) is arranged on the top wall (11) and protrudes downwardly into the water separation space (27) and / or that the second droplet separation device (12) is arranged on the side wall (29) and protrudes into the water separation space (27).

11. Motor vehicle according to one of the preceding claims, **characterized in that** the water separation space (27) is connected to the air outlet opening (38) by means of a first channel (14), wherein the first channel (14) is directly connected to the passenger compartment (40), such that in operation of the air conditioner (15) at the same time air from the passenger compartment (40) and fresh air can be lead to the first channel (14).

12. Motor vehicle according to one of the preceding claims, **characterized in that** the water separating space (27) is connected to the air inlet opening (7) by means of a second channel (33), wherein preferably the second channel (33) comprises a water pre-separating drain (17).

13. Motor vehicle according to one of the preceding claims, **characterized in that** the air conditioner (15) is arranged in the passenger compartment (40) and the water box (6, 6', 6") is arranged in the motor compartment (50).

14. Motor vehicle according to one of the preceding claims, **characterized in that** the air from the passenger compartment (40) streams through an opening (39) in the side wall (29) and / or through an opening (39) in the top wall (11), preferably through an opening (39) in the top wall (11), into the subarea (321) which is arranged, in direction of the air stream, downstream of the water discharge opening (24).

15. Motor vehicle according to claim 1 or 2, **characterized in that** in the inner space (32), in particular in the water separating space (27), no second droplet separating device (12) is arranged.

## Revendications

1. Un véhicule automobile ayant un habitacle (40), un réservoir d'eau (6, 6', 6") et une climatisation (15) qui est en communication avec le réservoir d'eau (6, 6', 6"), lequel présente un espace intérieur (32) comprenant un espace de séparateur d'eau (27), une ouverture d'admission d'air (7), une ouverture d'émission d'air (38) ainsi qu'une ouverture d'écoulement d'eau (24) pour l'élimination d'eau hors de l'espace de séparateur d'eau (27), où l'ouverture d'admission d'air (7), l'ouverture d'émission d'air (38) ainsi que l'ouverture d'écoulement d'eau (24) sont en communication les unes avec les autres à travers l'espace intérieur (32), où de l'air frais peut être aspiré au niveau de l'ouverture d'admission d'air (7) au moyen de la climatisation (15), qui s'écoule à travers l'espace de séparateur d'eau (27) en communication avec l'ouverture d'admission d'air (7) ainsi qu'avec l'ouverture d'émission d'air (38) et délimité par une paroi inférieure (28), une paroi latérale (29) ainsi qu'une paroi supérieure (11), ainsi qu'à travers l'ouverture d'émission d'air (38) vers la climatisation (15), et à partir de celle-ci vers l'habitacle (40), où l'espace intérieur (32) est en communication avec l'habitacle (40) de sorte que lors de l'opération de la climatisation (15) de l'air de l'habitacle et simultanément de l'air frais peut être amené dans l'espace intérieur (32), où l'ouverture d'écoulement d'eau (24) pour l'élimination d'eau hors de l'espace de séparateur d'eau (27) est disposée dans la paroi inférieure (28), et où l'espace intérieur (32) est formé d'un domaine partiel (321) situé en aval du flux d'air de l'ouverture d'écoulement d'eau (24) ainsi que d'un domaine partiel (322) situé en amont du flux d'air de l'ouverture d'écoulement d'eau (24), **caractérisé en ce que** le véhicule automobile (1, 1', 1") présente un canal d'air (10') à travers lequel le domaine partiel (321) situé en aval du flux d'air de l'ouverture d'écoulement d'eau (24) est directement en communication avec l'habitacle (40) et que ce canal d'air (10') présente une section (100) laquelle comprend une ouverture de sortie d'air (37) ou la section (100) pénètre dans l'espace intérieur (32) ainsi que forme un dispositif séparateur de gouttelettes (12), où l'ouverture de sortie d'air (37) est disposée dans le domaine partiel (321) situé en aval du flux d'air de l'ouverture d'écoulement d'eau (24).

2. Le véhicule automobile selon la revendication 1, **caractérisé en ce que** la section d'espace (324) disposée dans l'espace de séparateur d'eau (27) du domaine partiel (321) situé en aval du flux d'air de l'ouverture d'écoulement d'eau (24) est directement en communication avec l'habitacle (40).

3. Le véhicule automobile selon la revendication 1 ou 2, **caractérisé en ce que** la section (100) du canal d'air (10') pénètre dans l'espace de séparateur d'eau (27).

4. Le véhicule automobile selon une des revendications précédentes, **caractérisé en ce que** la section (100) est au moins partiellement disposée dans le domaine partiel (322) situé en amont du flux d'air de l'ouverture d'écoulement d'eau (24), préférablement essentiellement dans le domaine partiel (322) situé en amont du flux d'air de l'ouverture d'écoulement d'eau (24).

5. Le véhicule automobile selon une des revendications précédentes, **caractérisé en ce que** l'ouverture de sortie d'air (37) est orientée en aval du flux d'air.

6. Le véhicule automobile selon une des revendications précédentes, **caractérisé en ce que** le canal d'air (10') présente une soupape (30), qui est ouverte lors de l'aspiration de l'air à partir de l'habitacle (40).

7. Le véhicule automobile selon la revendication 6, **caractérisé en ce que** la soupape (30) est commandée.

8. Le véhicule automobile selon une des revendications précédentes, **caractérisé en ce que** le canal d'air (10') présente un moyen de transport d'air (42) pour commander l'alimentation en air de l'habitacle (40) dans le réservoir d'eau (6').

9. Le véhicule automobile selon une des revendications précédentes, **caractérisé en ce que** un deuxième dispositif séparateur de gouttelettes (12) est disposé dans le domaine partiel (321) situé en aval du flux d'air de l'ouverture d'écoulement d'eau (24) et/ou dans le domaine partiel (322) situé en amont du flux d'air de l'ouverture d'écoulement d'eau (24), préférablement dans le domaine partiel (322) situé en amont du flux d'air du l'ouverture d'écoulement d'eau (24), plus préférablement dans la section d'espace (323) disposée dans l'espace de séparateur d'eau (27) du domaine partiel (322) situé en amont du flux d'air du l'ouverture d'écoulement (24), qui est contourné par l'air frais aspiré.

10. Le véhicule automobile selon la revendication 9, **caractérisé en ce que** le deuxième dispositif séparateur de gouttelettes (12) est disposé sur la paroi supérieure (11) et fait saillie vers le bas dans l'espace de séparateur d'eau (27) et/ou que le deuxième dispositif séparateur de gouttelettes (12) est disposé sur une paroi latérale (29) et pénètre dans l'espace de séparateur d'eau (27).

11. Le véhicule automobile selon une des revendications précédentes, **caractérisé en ce que** l'espace de séparateur d'eau (27) est en communication avec l'ouverture d'émission d'air (38) à travers un premier canal (14), où le premier canal (14) est directement en communication avec l'habitacle (40) de sorte que lors de l'opération de la climatisation (15), de l'air de l'habitacle (40) et simultanément de l'air frais peut être amené dans le premier canal (14).

12. Le véhicule automobile selon une des revendications précédentes, **caractérisé en ce que** l'espace de séparateur d'eau (27) est en communication avec l'ouverture d'admission d'air (7) à travers un deuxième canal (33), où préférablement le deuxième canal (33) présente un écoulement de pré-séparation d'eau (17).

13. Le véhicule automobile selon une des revendications précédentes, **caractérisé en ce que** la climatisation (15) est disposée dans l'habitacle (40) et le réservoir d'eau (6, 6', 6") est disposée dans le compartiment moteur (50).

14. Le véhicule automobile selon une des revendications précédentes, **caractérisé en ce que** l'air s'écoule à partir de l'habitacle (40), à travers une ouverture (39) dans la paroi latérale (29) et/ou à travers une ouverture (39) dans la paroi supérieure (11), préférablement à travers une ouverture (39) dans la paroi supérieure (11), vers le domaine partiel (321) situé en aval du flux d'air de l'ouverture d'écoulement d'eau (24).

15. Le véhicule automobile selon la revendication 1 ou 2, **caractérisé en ce que** aucun deuxième dispositif séparateur de gouttelettes (12) est disposé dans l'habitacle (32), en particulier dans l'espace de séparateur d'eau (27)
